(19) Europäisches Patentamt

European Patent Office

Office européen des brevets

(11) EP 0 620 635 B1

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.6: **H02M 7/17**, H02M 1/12, G05F 1/59

(21) Anmeldenummer: **93119565.5**

(22) Anmeldetag: **04.12.1993**

(54) **Gesteuerter Drehstrom-Gleichrichter**

Controlled threephase current rectifier

Redresseur commandé à courant triphasé

(84) Benannte Vertragsstaaten:
**BE DE FR GB IT**

(30) Priorität: **23.03.1993 DE 4309122**

(43) Veröffentlichungstag der Anmeldung:
**19.10.1994 Patentblatt 1994/42**

(73) Patentinhaber: **Licentia Patent-Verwaltungs-GmbH D-60596 Frankfurt (DE)**

(72) Erfinder:
* **Blacha, Norbert, Dr.**
  **D-59581 Warstein (DE)**
* **Winkler, Detlef, Dipl.-Ing.**
  **D-59514 Welver (DE)**
* **Maiberg, Paul, Dipl.-Ing.**
  **D-59609 Anröchte (DE)**

(74) Vertreter: **Erbacher, Alfons, Dipl.-Ing. AEG Aktiengesellschaft D-60591 Frankfurt (DE)**

(56) Entgegenhaltungen:
EP-A- 0 080 925     GB-A- 2 017 430
US-A- 4 459 652     US-A- 4 876 634

## Beschreibung

Die Erfindung betrifft einen gesteuerten Drehstrom-Gleichrichter mit zumindest einer Teileinheit mit einem ersten und einem zweiten Drehstromsystem in parallelen Leitungszweigen, welche jeweils eine Sechspuls-Brückenschaltung mit steuerbaren Stromrichterventilen aufweisen, und mit einer Vorrichtung, die eine Phasenverschiebung der Spannungen des ersten Drehstromsystems zu denen des zweiten Drehstromsystems von 30° el erzeugt, wobei diese Vorrichtung in dem Leitungszweig des zweiten Drehstromsystems liegt und in bezug auf die Energieflußrichtung vor die darin befindliche Sechspuls-Brückenschaltung geschaltet ist und wobei die positiven und negativen Ausgangsklemmen aller Sechspuls-Brückenschaltungen direkt miteinander verbunden sind und die Anschlüsse der gleichgerichteten Ausgangsspannung bilden.

Ein derartiger gesteuerter Drehstrom-Gleichrichter mit zwei sechspuls-Brückenschaltungen in parallelen Leitungszweigen ist aus der US-A-4 459 652 bekannt. Die eine der beiden Sechspuls-Brückenschaltungen wird nur dann genutzt, wenn auf der Gleichspannungsseite ein erhöhter Leistungsbedarf besteht. Folglich wird während des Betriebes die Leistung nicht gleichmäßig auf die beiden Sechspuls-Brückenschaltungen aufgeteilt.

Die EP-A-0 080 925 beschreibt ebenfalls einen Drehstrom-Gleichrichter mit zwei Sechspuls-Brückenschaltungen in parallelen Leitungszweigen, wobei mittels eines Transformators eine Phasenverschiebung von 30° zwischen den Spannungen in den beiden Leitungszweigen erzeugt wird. Die positiven Ausgangsklemmen der beiden Sechspuls-Brückenschaltungen sind nicht unmittelbar, sondern über eine Saugdrossel, miteinander verbunden. Es wird ein zwölfpulsiges Verhalten des Drehstrom-Gleichrichters hervorgerufen.

Die Art der Regelung der in der Schaltung vorhandenen Stromrichterventile wird nicht beschrieben. Durch den Transformator und die Saugdrossel ist eine recht hohe Anzahl von (teuren) Wickelgiitern vorhanden. Auch bei dem Drehstrom-Gleichrichter aus der GB-A-2 017 430 sind die positiven Ausgangsklemmen der parallelen Sechspuls-Brückenschaltungen iiber eine Saugdrossel miteinander verbunden. Eingangsseitig weisen die Sechspuls-Brückenschaltungen jeweils eine sternwicklung auf.

Beide Sternwicklungen sind - zur Erzeugung einer Phasenverschiebung der Spannungen - versetzt zueinander angeordnet und bilden Sekundärwicklungen eines Drehstromtransformators mit einer gemeinsamen Primärwicklung.

Der Erfindung liegt die Aufgabe zugrunde, einen gesteuerten Drehstrom-Gleichrichter mit möglichst einfachen und kostengünstigen technischen Mitteln zu schaffen, der mit möglichst wenigen Wickelgütern auskommt, nur sehr geringe Netzrückwirkungen verursacht und bei dem selbst bei auftretenden Störgrößen. insbesondere bei Lastsprüngen, eine schnell wirkende Regelung eintritt.

Diese Aufgabe wird dadurch gelöst, daß im Falle mehrerer Teileinheiten alle Teileinheiten gleich aufgebaut und parallel verschaltet sind. daß den Sechspuls-Brückenschaltungen in allen Leitern der Leitungszweige jeweils eine Netzdrossel vorgeschaltet ist, daß die Ausgangsspannung durch einen einzigen Regler automatisch geregelt wird, daß dazu von diesem Regler Steuerwinkel lediglich für eine einzige festgelegte Sechspuls-Brückenschaltung erzeugt werden und daß aus diesen Steuerwinkeln für jede weitere Sechspuls-Brückenschaltung die Steuerwinkel unter Einbeziehung des aus der jeweiligen Sechspuls-Brückenschaltung fließenden Stroms gebildet werden.

Dieser Drehstrom-Gleichricher zeichnet sich dadurch aus, daß er besonders geringe Netzrückwirkungen verursacht.

Durch die Verschaltung von zwei (herkömmlichen) Sechspuls-Brückenschaltungen in zwei parallelen Leitungszweigen (im Falle einer einzigen Teileinheit) und durch eine Vorrichtung, die eine Phasenverschiebung der beiden die Sechspuls-Brückenschaltungen versorgenden Drehstromsysteme um 30° hervorruft ("30°-Schwenk"), wird bei entsprechender Zündung der Stromrichterventile ein besonders günstiger zeitlicher Verlauf der Leiterströme erzielt; es werden nämlich die Netzrückwirkungen minimiert.

Der Drehstrom-Gleichrichter kommt ohne Saugdrossel und ohne Glättungsdrossel im Gleichstromkreis aus.

Er gestattet einen stabilen Betrieb bei gleichmäßiger Stromaufteilung auf die Sechspuls-Brückenschaltungen. Durch die Möglichkeit der Parallelschaltung mehrerer Teileinheiten ist der Drehstrom-Gleichrichter auch bei Ausfall eines Thyristors weiterhin für die Abgabe einer gleichgerichteten Spannung benutzbar.

Es ist auch möglich, mehrere Teileinheiten mit jeweils zwei Sechspuls-Brückenschaltungen in einem einzigen Drehstrom-Gleichrichter zu verschalten. Auch in diesem Falle wird die Ausgangsgleichspannung über einen einzigen Regler geregelt.

Der Regler gibt Steuerwinkel für eine bestimmte Sechspuls-Brückenschaltung ab. Die Steuerwinkel für die anderen parallel verschalteten Sechspuls-Brückenschaltungen werden jeweils bestimmt aus der Addition des von dem Regler stammenden Steuerwinkels und der Abweichung des aus der jeweiligen parallel verschalteten Sechspulsbrückenschaltung fließenden Stromes vom Mittelwert aller Ströme, die aus den Sechspuls-Brückenschaltungen herausfließen.

Weitere bevorzugte Ausführungsformen der Erfindung sind in den Unteransprüchen gekennzeichnet.

Im folgenden wird ein Ausführungsbeispiel der Erfindung anhand von sechs Zeichnungen näher beschrieben.

Es zeigen:

Fig. 1     einen Schaltplan des erfindungsgemäßen Drehstrom-Gleichrichters,

Fig. 2     den Verlauf der Spannungen eines Drehstromnetzes mit den Zeitpunkten der natürlichen Kommutierung,

Fig. 3     den Regelkreis zur Regelung der gleichgerichteten Spannung am Ausgang des Drehstromgleichrichters;

Fig. 4     die Zündmustergenereiereinheit;

Fig. 5     einen Ablaufplan zur Erzeugung des reduzierten Steuerwinkels und

Fig. 6     eine mit Indizes versehene Tabelle, in der Zündmuster gespeichert sind.

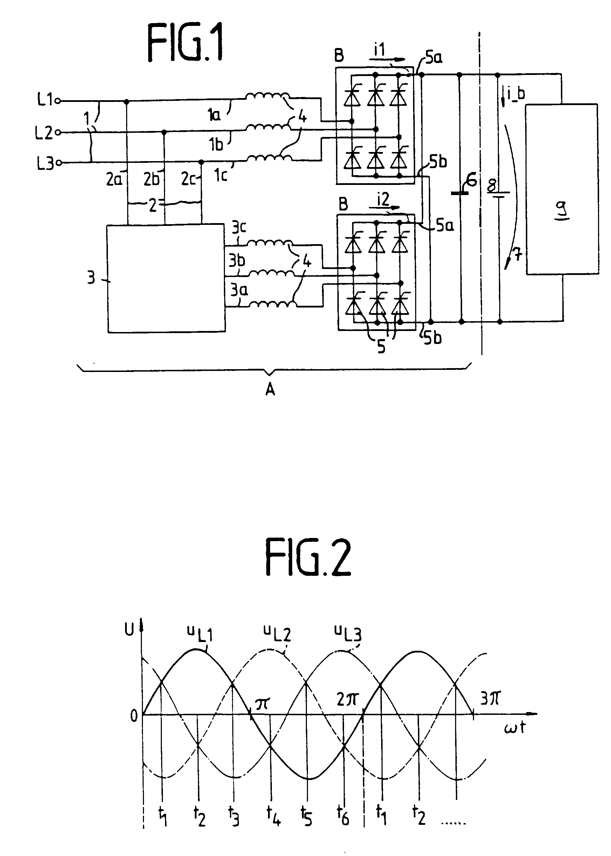

In Fig. 1 ist der Schaltplan für einen gesteuerten Drehstrom-Gleichrichter (A) dargestellt. Er ist an ein Drehstromnetz mit den drei Phasen (L1, L2, L3) angeschlossen. Ein Nulleiter ist nicht vorhanden. Der von dem Drehstromnetz eingespeiste Drehstrom verteilt sich am Eingang des Drehstrom-Gleichrichters (A) auf zwei Leitungszweige (1, 2), die jeweils drei Leiter (1a, 1b, 1c und 2a, 2b, 2c) aufweisen; es teilt sich der Strom jeder Phase (L1, L2, L3) jeweils auf zwei, unterschiedlichen Leitungszweigen (1, 2) angehörenden Leitern (1a, 1b, 1c, 2a, 2b, 2c) auf. In dem einen Leitungszweig (2) ist, den drei Phasen (L1, L2, L3) des Drehstromnetzes zugewandt, ein Drehstromtransformator (3) eingefügt.

Primärseitig weist er eine Dreieckswicklung und sekundärseitig eine Sternwicklung auf. Es handelt sich also um einen Transformator des Typs Dy1. Die Spannungen zwischen den Leitern (1a, 1b, 1c) des Leitungszweiges (1) bilden ein erstes Drehstromsystem. Die Spannungen, die zwischen den ausgangsseitigen Leitern (3a, 3b, 3c) des Drehstromtransformators (3) anliegen, bilden ein zweites Drehstromsystem. Diese beiden Drehstromsysteme weisen zueinander eine Phasenverschiebung von 30° auf, die von dem Drehstromtransformator (3) verursacht wird ("30°-Schwenk"). In den ausgangsseitigen Leitern (3a, 3b, 3c) des Drehstromtransformators (3) und in den Leitern (1a, 1b, 1c) des Leitungszweigs (1) liegt jeweils eine Netzdrossel (4). Alle Netzdrosseln (4) sind gleicher Bauart und haben daher praktisch die gleiche Induktivität, wenn von herstellungsbedingten Streuungen abgesehen wird.

In jedem der beiden Leitungszweige (1, 2) ist hinter den jeweils zugehörigen drei Netzdrosseln (4) eine Sechspuls-Brückenschaltung (B) angeschlossen. Durch die Verschaltung entsteht eine B12-Brücke.

Die Sechspuls-Brückenschaltungen (B) sind baugleich ausgeführt; es handelt sich hierbei um üblicherweise mit "B6" gekennzeichnete Sechspuls-Brückenschaltungen (B). Jede der beiden Sechspuls-Brückenschaltungen (B) hat sechs Thyristoren (5) und weist einen positiven Ausgang (5a) und einen negativen Ausgang (5b) auf. Der postive Ausgang (5a) der im Zweig (1) liegenden Sechspuls-Brückenschaltung (B) ist von einem Strom (i1) durchflossen; aus dem Ausgang (5a) der anderen Sechspuls-Brückenschaltung (B) fließt ein Strom (i2). Die positiven Ausgänge (5a) und die negativen Ausgänge (5b) der beiden Sechspuls-Brückenschaltungen (B) sind jeweils verbunden und jeweils an einen Anschluß eines Kondensators (6) geführt. An dem Kondensator (6) stellt sich im Betriebszustand eine (leicht wellige) Gleichspannung (7) ein.

Parallel zu dem Kondensator (6) liegt eine aufladbare Batterie (8). Diese Batterie (8) versorgt einen an ihr angeschlossenen Wechselrichter (mit daran angeschlossener) Last mit Spannung, wenn die Energieversorgung für das Drehstromnetz mit den Phasen (L1, L2, L3) unterbrochen ist.

Wechselrichter und Last sind als eine gemeinsame Einheit (9) dargestellt.

Es handelt sich also bei der Fig. 1 um eine Anlage zur unterbrechungsfreien Stromversorgung (USV), die insbesondere für Rechenzentren und Krankenhäuser eingesetzt werden kann und bei Ausfall der Netzspannung vorübergehend eine Energieversorgung der an den Wechselrichter angeschlossenen Verbraucher sicherstellt. Gleichzeitig dient diese Anlage zum Laden der am Ausgang des Drehstrom-Gleichrichters angeschlossenen Batterie (8).

Fig. 2 zeigt den (zeitlichen) Verlauf der drei Strangspannungen ($u_{L1}$, $u_{L2}$, $u_{L3}$) eines Dreiphasensystems, beispielsweise des speisenden Drehstromnetzes. Die Strangspannungen ($u_{L1}$, $u_{L2}$, $u_{L3}$) sind um 120° phasenverschoben.

Zeitpunkte ($t_1$ ... $t_6$), an denen sich der Verlauf zweier Strangspannungen ($u_{L1}$, $u_{L2}$, $u_{L3}$) schneidet, bilden die Zeitpunkte der natürlichen Kommutierung.

Die Regelung der Gleichspannung (7) wird durch eine Phasenanschnittsteuerung der Thyristoren (5) erzielt, wie weiter unten noch ausgeführt wird.

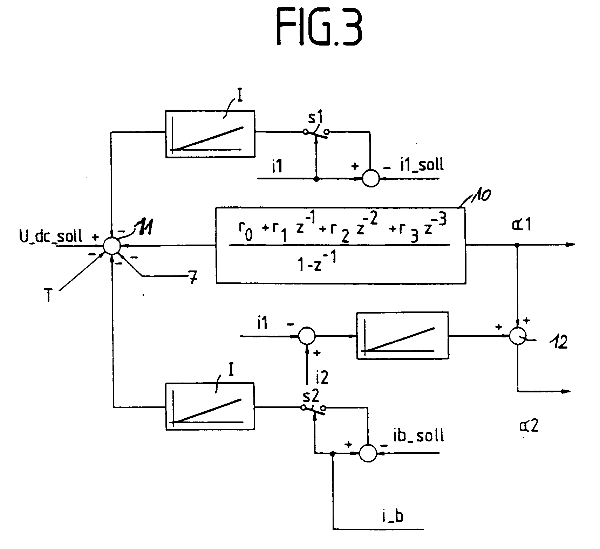

Fig. 3 illustriert die Regelung der am Ausgang des Drehstrom-Gleichrichters (A) vorhandenen Gleichspannung (7). Stellgrößen sind die Steuerwinkel ($\alpha_1$, $\alpha_2$), mit denen ein mehr oder weniger zeitverzögertes Zünden der Thyristoren (5) erreicht wird, wodurch die Gleichspannung in ihrer Höhe beeinflußbar ist. Weiter unten ist ausgeführt, daß aus den Steuerwinkeln ($\alpha_1$, $\alpha_2$) zunächst zwei "reduzierte Steuerwinkel" bestimmt werden, die die Zeitverzögerung festlegen, mit der die Thyristoren (5) gezündet werden. Der Steuerwinkel ($\alpha_1$) ist für die Steuerung der Sechspuls-Brückenschaltung (B6) des Zweigs (1) bestimmt, der Steuerwinkel ($\alpha_2$) für die des anderen Zweigs (2).

Kernstück der Regelung ist eine Regeleinrichtung (10); hierbei handelt es sich um einen digitalen PID-Regler mit einer Übertragungsfunktion, wie sie in dem Rechteck für die Regeleinrichtung (10) in Fig. 3 dargestellt ist (Darstellung in der z-Transformation).

Sämtliche in der Fig. 3 dargestellten Größen werden digital in einem Rechner verarbeitet.

Führungsgröße ist eine Gleichspannung (U_dc_soll); von dieser Führungsgröße werden verschiedene andere Größen abgezogen, die von Sensoren aufgenommen werden. Dies ist durch den Mischpunkt (11) dargestellt; als solche Größen werden herangezogen das Integral aus der Differenz des augenblicklich aus dem Ausgang (5a) der Sechspuls-Brückenschaltung (B) des Leitungszweigs (1) fließenden Stromes und eines Stromes (i1_soll), der maximal den Ausgang (5a) der Sechspulsbrücke (B) im Zweig (1) verlassen darf, allerdings nur, wenn die Differenz größer als ein festgelegter Grenzwert ist, ferner das Integral der Differenz des augenblicklich durch die Batterie fließenden Stromes (i_b) und eines Stromes (ib_soll), der maximal durch die Batterie (8) fließen darf, sofern die Differenz größer als ein weiterer Grenzwert ist, und schließlich eine der augenblicklichen (Batterie-)Temperatur proportionale Größe (T) (durch Regelung der gleichgerichteten Spannung wird der Batteriestrom beeinflußt, wodurch auch die Batterietemperatur verändert wird). Es ist auch noch die Einbeziehung weiterer Größen am Mischpunkt (11) denkbar.

Die Schalter (s1) und (s2) schließen nur dann und leiten die beiden erwähnten Differenzen weiter zum jeweils nachgeschalteten Integrator (I), wenn die Differenzen jeweils größer als die zugehörigen erwähnten Grenzwerte sind.

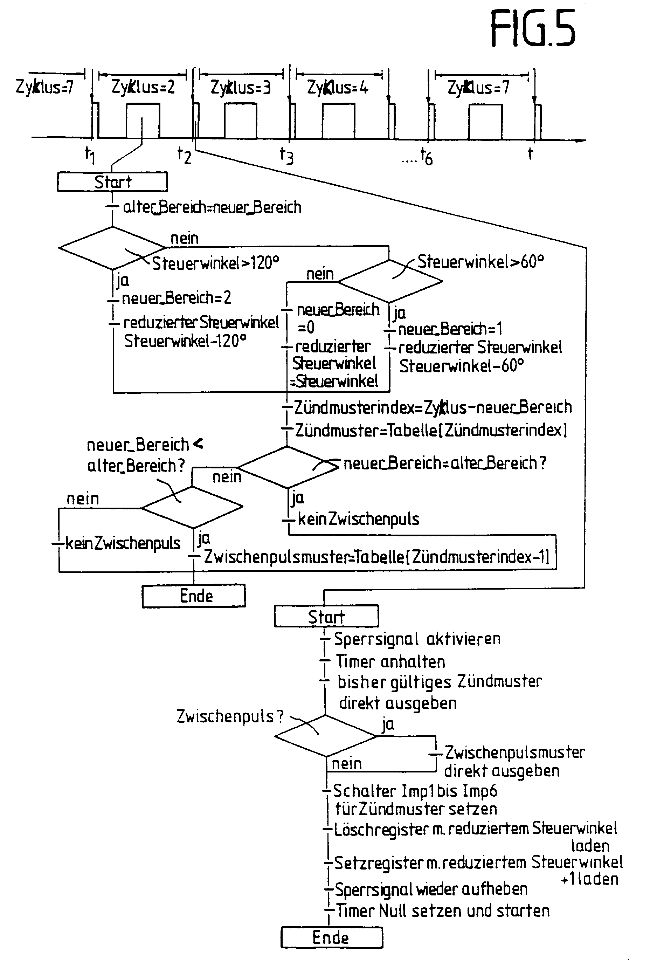

An dem Mischpunkt (11) wird zusätzlich abgezogen der Istwert der Gleichspannung (7), die die Regelgröße darstellt. Die in dem Mischpunkt (11) gebildete Größe wird als Signal der Regeleinrichtung (10) zugeführt. Ausgangsgröße der Regeleinrichtung (10) ist der Steuerwinkel ($\alpha_1$), dessen Wert im Rechner zu einem "reduzierten Steuerwinkel" weiterverarbeitet wird, was im einzelnen im Zusammenhang mit Fig. 5 erläutert wird.

Zusätzlich ist der Steuerwinkel ($\alpha_1$) einem Mischpunkt (12) zugeführt. Diesem Mischpunkt (12) ist ferner ein aus der Differenz der aus beiden Ausgängen (5a) der Sechspuls-Brückenschaltungen (B) fließenden Ströme (i2) und (i1) gebildetes und anschließend integriertes Signal zugeführt (dabei wird vor der Integration der Strom (i1) von dem Strom (i2) abgezogen).

Am Mischpunkt (12) werden die Größen addiert und bilden den Steuerwinkel ($\alpha_2$).

Wenn mehrere parallele Teileinheiten zu einem Drehstrom-Gleichrichter (A) verschaltet werden, dann wird als Differenz die Abweichung des aus der parallel liegenden Sechspuls-Brückenschaltung (B) fließenden Stromes zu dem Mittelwert aller aus den positiven Ausgängen der Sechspuls-Brückenschaltungen (B) fließenden Ströme gebildet. Diese Differenz wird integriert und dann zu dem Steuerwinkel ($\alpha_1$) addiert.

Das Ergebnis ist der Steuerwinkel der parallelliegenden Sechspuls-Brückenschalung (B). In dieser Weise wird bei jeder parallelliegenden Sechspuls-Brückenschaltung (B) verfahren.

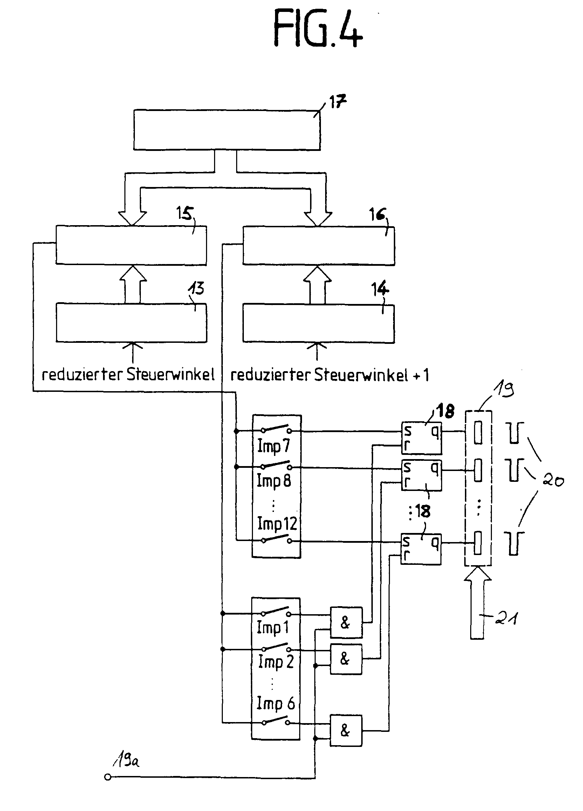

Fig. 4 veranschaulicht, wie die Zündmuster zum Zünden der Thyristoren (5) erzeugt werden; bei der hier angewandten binären Logik werden die Thyristoren (5) bei Low-Pegeln gezündet, und zwar wird bei einem Low-Pegel ein Zündimpulsverstärker angesteuert, der dann einen Zündimpuls an den angeschlossenen Thyristor (5) abgibt.

Dargestellt ist eine Zündmustergeneriereinheit für die Sechspuls-Brückenschaltung (B) des ersten Drehstromsystems im Leitungszweig (1). Die Zündmustergeneriereinheit für jede andere parallelliegende Sechspuls-Brückenschaltung (B) arbeitet in gleicher Weise. In ein Löschregister (13) wird ein (noch weiter unten in Zusammenhang mit Fig. 5 erläuterter) "reduzierter Steuerwinkel" als Binärsignal eingelesen. Diesem Binärsignal wird eine binäre Eins aufaddiert und das Ergebnis in ein Setzregister (14) eingelesen. Das Löschregister (13) und das Setzregister (14) sind jeweils mit einem eigenen Komparator (15, 16) verbunden. Ein Timer (17) beginnt nach seinem Rücksetzen (was von dem Rechner gesteuert wird, wie noch weiter unten erläutert wird), mit Null anfangend, binär in Schritten mit einer Dauer von 1 μs zu zählen. Der Timer (17) ist unmittelbar mit beiden Komparatoren (15, 16) verbunden.

Wenn der Timer (17) den Wert des "reduzierten Steuerwinkels" erreicht hat, gibt der Komparator (15), an den das Löschregister (13) angeschlossen ist, ein Signal ab, das zu Set-Eingängen (s) von sechs Flip-Flops (18) geleitet wird.

Den Set-Eingängen (s) sind sechs geschlossene Schalter (Imp7, Imp8, ... Imp12) vorgeschaltet. Durch die geschlossenen Schalter (Imp7, Imp8, ... Imp12) erzeugt das vom Komparator (15) stammende Signal bei den Flip-Flops (18) ein Löschmuster, denn an den Ausgängen (q) der Flip-Flops (18), die parallel zu einem Zündmusterausgabeport (19) geführt sind, sind High-Pegel, und diese High-Pegel gelangen über den Zündmusterausgabeport (19) zu Zündimpulsverstärkern der Thyristoren (5) der Sechspuls-Brücke (B).

Während ein High-Pegel am Zündimpulsverstärker anliegt, kann der zugeordnete Thyristor (5) nicht gezündet werden.

Einen Zeitschritt später (also 1 μs später) hat der Timer den Wert des Setzregisters (14) erreicht. Nun gibt der Komparator (12) ein Signal an sechs parallele Schalter (Imp1, Imp2, ... Imp6) ab.

Durch deren Schalterstellung wird das Zündmuster gebildet, denn jedem Schalter (Imp1, Imp2, ... Imp6) ist ein Thyristor (5) zugeordnet; wenn ein Schalter (Imp1, Imp2, ... Imp6) geschlossen ist, bedeutet dies, daß der zugehörige Thyristor (5) gezündet wird, sobald vom Komparator (16) ein Signal kommt. Die Schalterstellung wird vom Rechner gesteuert, wie noch weiter unten erläutert wird.

Jeder geschlossene Schalter (Imp1, Imp2, ... Imp6) verbindet den Ausgang des Komparators (16) jeweils mit dem Eingang eines einzelnen UND-Gatters; zusätzlich ist an die UND-Gatter jeweils eine Leitung für ein Sperrsignal (19a) geführt.

Wenn das Sperrsignal (19a) einen High-Pegel annimmt, was bei der verwendeten Logik bedeutet, daß das Sperren aufgehoben werden soll, geben diejenigen UND-Gatter, die über geschlossene Schalter (Imp1, Imp2, ... Imp6) mit dem (anliegenden) Signal des Komparators (16) versorgt werden, ein High-Pegel-Signal ab; dieses High-Pegel-Signal wird an die Reseteingänge der bereits zuvor erwähnten Flip-Flops (18) geführt.

An den betreffenden Flip-Flops (18) entsteht am Ausgang (q) ein Low-Pegel, was einem Zündimpuls (20) entspricht.

Die parallel liegenden Signale an den Ausgängen (q) der Flip-Flops (18), die mit dem Zündmusterausgabeport (19) direkt verbunden sind, bilden nun das Zündmuster zur Ansteuerung der sechs Thyristoren (5) der Sechspuls-Brückenschaltung (B) im Leitungszweig (1); je nach Stellung der Schalter (Imp1, Imp2, ... Imp6) werden die Thyrstoren (5) sofort gezündet.

Am Zündmusterausgabeport (19) ist es auch möglich, direkt - ohne Ansteuerung der Flip-Flops (18) - ein Zündmuster auszugeben (angedeutet durch den Pfeil [21]), was im Zusammenhang mit der Erläuterung zu Fig. 5 noch erwähnt wird.

Fig. 5 zeigt in einem Ablaufplan die Generierung des weiter oben erwähnten "reduzierten Steuerwinkels"; der Ablaufplan bezieht sich auf die Ansteuerung der Thyristoren (5) einer der beiden Sechspuls-Brückenschaltungen (B); für die Ansteuerung der anderen Sechspuls-Brückenschaltung (B) gelten gleiche Überlegungen.

Oben in der Fig. 5 sind auf der Zeitachse die Zeitpunkte ($t_1$, $t_2$, $t_3$, ... $t_6$) der natürlichen Kommutierung vermerkt; in einer Periode treten sechs solcher Zeitpunkte ($t_1$, $t_2$, $t_3$, ... $t_6$) auf (vgl. Fig. 2). Die Zeitabschnitte zwischen diesen Zeitpunkten ($t_1$, $t_2$, $t_3$, ... $t_6$) in einer Periode sind - beginnend mit 2 - durchnumeriert, der gerade gültige Wert wird durch nicht illustrierte Interrupt-Routinen in die Variable "Zyklus" (Zyklus=2, Zyklus=3, Zyklus=4, ... Zyklus=7) eingelesen; es sind also sechs verschiedene Zyklen vorhanden, nach Ablauf dieser Zyklen ist die Spannungsverteilung des speisenden Drehstromnetzes wieder wie bei Beginn des ersten Zyklus. Die Interrupt-Routine, die den Wert "2" in die Variable "Zyklus" schreibt, läuft ab, wenn eine bestimmte, eingangsseitig anliegende (Netz-)Spannung ("Bezugsspannung" für die Festlegung der Zyklen) bei einem Nulldurchgang von einem negativen Wert auf einen positiven Wert übergeht.

Bei diesem Nulldurchgang wird ein Timer gesetzt, der den Ablauf von weiteren Interrupt-Routinen startet, die den Beginn der anderen Zyklen bestimmen und dabei nacheinander einen der Werte "3" bis "7" in die Variable "Zyklus" einlesen.

Wenn der Zeitpunkt für die Zündung der Thyristoren (5) erreicht ist, muß ein ganz bestimmtes "Zündmuster" an die sechs Thyristoren (5) gelegt werden, d. h. an jeden Thyrsitor (5), der gezündet werden soll, wird über Zündimpulsverstärker an seinen Steuereingang ein Spannungspegel zur Zündung dieses Thyristors angelegt. Die übrigen Thyristoren (5), die nicht gezündet werden sollen, erhalten keinen Spannungspegel.

Weil in jedem der sechs (nacheinander ablaufenden) Zyklen die Spannungsverhältnisse an den Zuleitungen zur Sechspuls-Brückenschalung (B) verschieden sind, ist für jeden der sechs Zyklen ein eigenes Zündmuster in einer Tabelle gespeichert.

Die Zündmuster sind in der Reihenfolge gespeichert, in der sie in dem Falle, daß die von der Regeleinrichtung (10) ermittelten Steuerwinkel ($\alpha_1$) stets kleiner als 60° sind, nacheinander zur Erzeugung von Zündimpulsen (20) abgegeben werden.

Bei der Tabelle handelt es sich um eine Feldvariable mit dem Namen "Tabelle".

Über eine Indexvariable "Zündmusterindex" werden die Einträge aus der Tabelle ausgelesen; die Tabelle enthält acht Einträge. Die sechs Einträge, die den Zündmusterindizes 2 bis 7 zugewiesen sind, entsprechen den Zündmustern für die Zyklen 2 bis 7. Die Tabelle ist um zwei Eintragungen ergänzt, die eine ist unter der Adresse "0" und die andere unter der Adresse "1" in der Tabelle gespeichert.

Unter der Adresse "1" ist das gleiche Zündmuster wie das unter der Adresse "7" abrufbare gespeichert, unter der Adresse "0" dasselbe Zündmuster, das auch unter der Adresse "6" abrufbar ist.

Jedem Eintrag in der Tabelle ist auch ein Bereich für den Phasenwinkel der oben erwähnten "Bezugsspannung" zuzuordnen, nämlich dem Eintrag unter der Adresse "2" ein Bereich von 0° bis 60°, dem zweiten Eintrag ein Bereich von 60° bis 120°, dem dritten Eintrag unter der Adresse "4" ein Bereich von 120° bis 180° u. s. w. (vgl. Fig. 2).

Das Programm zur Erzeugung des "reduzierten Steuerwinkels" startet in jedem Zeitabschnitt zwischen den Zeitpunkten ($t_1$, $t_2$, $t_3$, ... $t_6$) der natürlichen Kommutierung und muß bei dem nächstfolgenden Zeitpunkt ($t_1$, $t_2$, $t_3$, ... $t_6$) der natürlichen Kommutierung abgearbeitet sein. Bei Start des Programmablaufs wird zunächst der Wert einer Variablen "neuer_Bereich", der von dem vorangegangen Programmlauf stammt (bzw. bei Neustart des Programms ein voreingestellter Wert von 0 ist) der Variablen "alter_Bereich" zugewiesen.

Anschließend wird der von der Regeleinrichtung (10) zuletzt als Ausgangsgröße abgegebene Steuerwinkel ($\alpha_1$) ausgewertet; ist er größer als 120°, erhält die Variable "neuer_Bereich" den Wert "2", und der "reduzierte Steuerwinkel" wird berechnet als Differenz aus dem Steuerwinkel ($\alpha_1$) und 120°.

Ist der Steuerwinkel ($\alpha_1$) kleiner oder gleich 120° und gleichzeitig größer als 60°, errechnet sich der "reduzierte Steuerwinkel" aus der Differenz des Steuerwinkels ($\alpha_1$) und 60°. Die Variable "neuer_Bereich" erhält den Wert "1".

Diese Variable wird "0", wenn die vorgenannten Bedingungen für den Steuerwinkel ($\alpha_1$) nicht erfüllt sind. In diesem Falle ist der "reduzierte Steuerwinkel" gleich dem von der Regeleinrichtung (10) abgegebene Steuerwinkel ($\alpha_1$).

Durch Erzeugung eines "reduzierten Steuerwinkels" wird eine besonders schnell reagierende, dynamische Regelung ermöglicht, denn es wird direkt nach jedem

Zeitpunkt ($t_1$, $t_2$, $t_3$, ... $t_6$) der natürlichen Kommutierung ein neues Zündmuster bei der Ansteuerung der Thyristoren (5) berücksichtigt, selbst dann, wenn der Regler einen Steuerwinkel ($\alpha_1$) abgibt, der größer als 60° ist, was einem Zeitabschnitt entspricht, der länger ist als der zeitliche Abstand zwischen zwei benachbarten Zeitpunkten ($t_1$, $t_2$, $t_3$, ... $t_6$) der natürlichen Kommutierung.

Es wird nun ein Wert für die Variable "Zündmusterindex" gebildet, und zwar aus der Differenz der Werte in der Variablen "Zyklus" - ein Wert, der abhängt von dem gerade aktuellen Zyklus wie in Fig. 5 oben dargestellt - und in der Variablen "neuer_Bereich".

Einer Variablen "Zündmuster" wird der Eintrag, der unter der Indexvariablen "Zündmusterindex" in der Tabelle gespeichert ist, zugewiesen. In der Variablen "Zündmuster" sind die "Informationen" gespeichert, die zum Einstellen der Schalter (Imp1, Imp2, Imp3, ... Imp6) benötigt werden; mit anderen Worten wird mit der Variablen "Zündmuster" ein Zündmuster für die Sechspuls-Gleichrichterbrücke (B) festgelegt.

Wenn der Wert der Variablen "neuer_Bereich" (es sind nur die Werte 0, 1 und 2 möglich) gleich dem Wert der am Programmstart gespeicherten Variablen "alter_Bereich" ist oder der Wert größer ist als der Wert in der Variable "alter_Bereich", dann wird kein Zwischenpulsmuster an die Sechspuls-Gleichrichterbrücke (6) gesandt. In diesen Fällen sind die Steuerwinkel ($\alpha_1$) der Regeleinrichtung (10) zweimal hintereinander gleich groß oder aber der "aktuelle" Steuerwinkel ($\alpha_1$) ist größer als der vorangegangene.

Wenn allerdings gilt, daß die Variable "neuer_Bereich" kleiner ist als die Variable "alter_Bereich", dann wird ein Zwischenpulsmuster aus der Tabelle herausgelesen, welches in der Tabelle vor dem aktuellen Zündmuster abgelegt ist, also unter der Adresse: "Zündmusterindex"-1. Mit anderen Worten wird das in der Tabelle vor dem "aktuellen" Zündmuster gespeicherte Zündmuster als Zwischenpulsmuster an den Zündmusterausgabeport geleitet, wie weiter unten noch näher erläutert wird.

Wenn ein Zeitpunkt ($t_1$, $t_2$, $t_3$ ... $t_6$) für eine natürliche Kommutierung erreicht ist, startet ein anderes Programm.

Es wird dabei zunächst das im Zusammenhang mit Fig. 4 erwähnte Sperrsignal aktiviert, d. h. es wird auf den Low-Pegel gesetzt. Dadurch wird verhindert, daß über die Flip-Flops (18) ein Zündmuster an den Zündmusterausgabeport (19) gesandt wird.

Anschließend wird der Timer (17) auf Null gesetzt und danach das bisher geltende Zündmuster erneut an die Sechspuls-Brückenschaltung (B) ausgegeben, und zwar direkt über den Zündmusterausgabeport (19) ohne Umweg über die Flip-Flops (18) (s. Fig. 4).

Wenn, wie oben näher erläutert, während des zuvor beschriebenen Programmlaufs ein Zwischenpulsmuster gebildet worden ist, wird es unverzüglich direkt an den Zündmusterausgabeport (19) geleitet, ebenfalls ohne Umweg über die Flip-Flops (18).

Anschließend werden die Schalter (Imp1, Imp2, ... Imp6) für die Erzeugung bes Zündmusters gesetzt (s. Fig. 4); durch den Wert der Variablen "Zündmuster" wird die Schalterstellung bestimmt; dieser Wert ist in dem zuvor beschriebenen Programmteil aus der Tabelle dieser Variablen zugewiesen worden.

Danach wird das Löschregister (13) mit dem Wert für den "reduzierten Steuerwinkel" geladen und das Setzregister (14) mit dem um Eins erhöhten Wert für den "reduzierten Steuerwinkel" (vgl. Beschreibung zu Fig. 4).

Direkt im Anschluß an die Zeitpunkte ($t_1$, $t_2$, $t_3$, ... $t_6$) der natürlichen Kommutierung werden also die zuvor in dem beschriebenen Programm berechneten Werte für das Zündmuster und den "reduzierten Steuerwinkel" zur Ansteuerung der Thyristoren (5) herangezogen.

Anschließend wird im Programm das Sperrsignal wieder aufgehoben, so daß über die Flip-Flops (18) wieder ein Zündmuster an den Zündmusterausgabeport (19) übergeben werden kann.

Zum Abschluß des Programms wird der Timer (13) auf Null gesetzt und neu gestartet, damit das "aktuelle" Zündmuster mit Hilfe des Komparators (15) zu dem durch den Inhalt des Setzregisters bestimmten Zeitpunkt, im aktuellen Zyklus an den Zündmusterausgabeport (19) und damit an die Sechspuls-Brückenschaltung (B) ausgegeben werden kann.

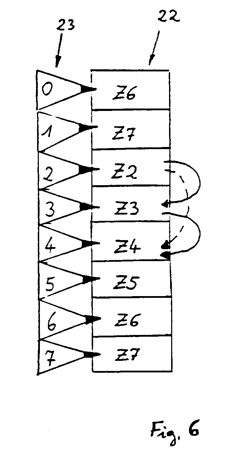

Fig. 6 zeigt die Tabelle (22), in der unter acht verschiedenen Adressen (23) sechs verschiedene Zündmuster gespeichert sind. Unter den Adressen 2 bis 7 sind die Zündmuster der Zyklen 2 bis 7 in der Reihenfolge der Zyklen gespeichert. Unter der Adresse "0" ist das Zündmuster des Zyklus 6 gespeichert und unter der Adresse "1" das Zündmuster des Zyklus 7.

Wenn in zwei nacheinander vom Regler digital ermittelten Steuerwinkeln ($\alpha_1$) ein Wechsel stattgefunden hat von einem hohen Wert (über 120°) zu einem kleinen Wert (unter 60°), dann wird nach dem nächsten Zeitpunkt der natürlichen Kommutierung zunächst ein Zwischenpulsmuster abgegeben, erst später wird der Timer auf Null gesetzt, damit anschließend nach einer Verzögerung, deren Dauer durch den Wert des "reduzierten Steuerwinkels" festgelgt wird, das "aktuelle" Zündmuster ausgegeben wird. Ein Sprung bei den ausgegebenen Zündmustern von einem Zündmuster Z2 zu einem Zündmuster Z4, wie er durch den strichlierten Pfeil in der Tabelle (22) angedeutet ist, ist durch das erläuterte Programm ausgeschlossen; in einem solchen Fall würde vor der Ausgabe des Zündmusters Z4 ein Zwischenpulsmuster an den Zündmusterausgabeport (19) geleitet.

**Patentansprüche**

1. Gesteuerter Drehstrom-Gleichrichter mit zumindest einer Teileinheit mit einem ersten und einem zweiten Drehstromsystem in parallelen Leitungszweigen (1, 2), welche jeweils eine Sechspuls-Brückenschaltung (B) mit steuerbaren Stromrichterventilen aufweisen, und mit einer Vorrichtung die eine Phasenverschiebung der Spannungen des ersten Drehstromsystems zu denen des zweiten Drehstromsystems von 30° el erzeugt, wobei diese Vorrichtung in dem Leitungszweig (2) des zweiten Drehstromsystems liegt und in bezug auf die Energieflußrichtung vor die darin befindliche Sechspuls-Brückenschaltung (B) geschaltet ist und wobei die positiven und negativen Ausgangsklemmen aller Sechspuls-Brückenschaltungen (B) direkt miteinander verbunden sind und die Anschlüsse der gleichgerichteten Ausgangsspannung (7) bilden,
dadurch gekennzeichnet,
daß im Falle mehrerer Teileinheiten alle Teileinheiten gleich aufgebaut und parallel verschaltet sind, daß den Sechspuls-Brückenschaltungen (B) in allen Leitern (1a, 1b, 1c und 3a, 3b, 3c) der Leitungszweige (1, 2) jeweils eine Netzdrossel (4) vorgeschaltet ist, daß die Ausgangsspannung (7) durch einen einzigen Regler (10) automatisch geregelt wird, daß dazu von diesem Regler (10) Steuerwinkel ($\alpha_1$) lediglich für eine einzige festgelegte Sechspuls-Brückenschaltung (B) erzeugt werden und daß aus diesen Steuerwinkeln ($\alpha_1$) für jede weitere Sechspuls-Brückenschaltung (B) die Steuerwinkel ($\alpha_1$) unter Einbeziehung des aus der jeweiligen Sechspuls-Brückenschaltung (B) fließenden Stroms ($i_2$) gebildet werden.

2. Gesteuerter Drehstrom-Gleichrichter nach Anspruch 1,
dadurch gekennzeichnet,
daß der Regler (10) in festen Zeitabständen einen Steuerwinkel ($\alpha_1$) erzeugt.

3. Gesteuerter Drehstrom-Gleichrichter nach Anspruch 1 oder 2,
dadurch gekennzeichnet,
daß zum Verstellen der Ausgangsspannung (7) nach jedem Zeitpunkt ($t_1$, $t_2$, $t_3$, ... $t_6$) einer natürlichen Kommutierung für jede Sechspuls-Brückenschaltung (B) ein reduzierter Steuerwinkel für die zeitverzögerte Ansteuerung der Stromrichterventile (5) ermittelt wird, daß im Falle eines Drehstrom-Gleichrichters (A) mit einer einzigen Teileinheit ein Steuerwinkel ($\alpha_2$) für die andere Sechspuls-Brückenschaltung (B) durch den vom Regler (10) erzeugten Steuerwinkel ($\alpha_1$) unter Addition des Integrals aus der Differenz des Stromes (i2) aus dem positiven Ausgang (5a) der jeweiligen Sechspuls-Brückenschaltung (B) und des Stromes (i1) aus dem positiven Ausgang (5a) der festgelegten Sechspuls-Brückenschaltung (B) gebildet werden, daß im Falle mehrerer Teileinheiten die Steuerwinkel für die von der festgelegten Sechspulspuls-Brückenschaltung (B) verschiedenen Sechspuls-Brückenschaltungen (B) dadurch gebildet werden, daß für jede einzelne dieser Sechspuls-Brückenschaltungen (B) zu dem vom Regler (10) erzeugten Steuerwinkel ($\alpha_1$) das Integral aus der Abweichung des Stromes aus dem positiven Ausgang (5a) der betreffenden Sechspuls-Brückenschaltung (B) von dem Mittelwert der Ströme aus den positiven Ausgängen aller Sechspuls-Brückenschaltungen (B) addiert wird, daß zwischen den Zeitpunkten ($t_1$, $t_2$, $t_3$, ... $t_6$) der natürlichen Kommutierung aus den Steuerwinkeln ($\alpha_1$, $\alpha_2$) reduzierte Steuerwinkel berechnet werden, indem durch einmaligen Abzug von 0°, 60° oder 120° von jedem einzelnen Steuerwinkel ($\alpha_1$, $\alpha_2$) der reduzierte Steuerwinkel nur Werte von 0° bis 60° annimmt, daß die Größe des reduzierten Steuerwinkels proportional ist der Dauer von dem nächsten Zeitpunkt ($t_1$, $t_2$, $t_3$, ... $t_6$) der natürlichen Kommutierung bis zum Zünden derjenigen Stromrichterventile, die durch ein von einer Zündmustergeneriereinheit gebildetes Zündmuster festgelegt sind, daß die Steuerwinkel ($\alpha_1$, $\alpha_2$) von 0° bis 60° in einen ersten Bereich eingeteilt werden, daß die Steuerwinkel ($\alpha_1$, $\alpha_2$) von über 60° bis 120° in einen zweiten Bereich und die Steuerwinkel ($\alpha_1$, $\alpha_2$) von über 120° in einen dritten Bereich eingeteilt werden, daß durch den Verlauf einer Leiterspannung eines bestimmten Drehstromsystems die Spannungsperiode in sechs Zyklen unterteilt ist, daß zu jedem Zyklus ein Zündmuster in einer Tabelle mit aufsteigendem Index gespeichert ist, daß die Reihenfolge der aus dieser Tabelle einzeln an die Sechspuls-Brückenschaltungen (B) abzugebenden Zündmuster sich nach den Bereichen richtet, denen zwei aufeinanderfolgende Steuerwinkel zugeordnet sind, wobei im Falle gleicher Bereiche das Zündmuster mit dem nächsthöheren Index beim nächsten Zeitpunkt ($t_3$, ... $t_6$) der natürlichen Kommutierung abgegeben wird, und die Reihenfolge nur dann von der Reihenfolge in der Tabelle abweicht, wenn zwei aufeinanderfolgende Steuerwinkel ($\alpha_1$, $\alpha_2$) zwei unterschiedlichen Bereichen zugeteilt sind, wobei im Falle eines Sprungs von einem höheren Bereich auf einen niedrigeren Bereich nach dem nächsten Zeitpunkt ($t_3$, ... $t_6$) der natürlichen Kommutierung zunächst ein Zwischenpulsmuster abgegeben wird, welches in der Tabelle vor dem aktuellen Zündmuster gespeichert ist, und anschließend, mit einer von dem reduzierten Steuerwinkel abhängigen Verzögerung, das aktuelle Zündmuster an die betreffende Sechspuls-Brückenschaltung (B) geleitet wird.

4. Gesteuerter Drehstrom-Gleichrichter nach einem der vorangehenden Ansprüche,
dadurch gekennzeichnet,
daß die Vorrichtung ein Drehstrom-Transformator (3) mit einer primärseitigen Dreieckswicklung und einer sekundärseitigen Sternwicklung ist.

5. Gesteuerter Drehstrom-Gleichrichter nach einem der Ansprüche 1 bis 3,

dadurch gekennzeichnet,
daß die Vorrichtung ein Drehstrom-Transformator (3) ist mit einer primärseitigen Sternwicklung und einer sekundärseitigen Dreieckswicklung.

6. Gesteuerter Drehstrom-Gleichrichter nach einem der vorangehenden Ansprüche,
dadurch gekennzeichnet,
daß die Sechspuls-Brückenschaltungen (B) Thyristoren (5) als Stromrichterventile enthalten.

7. Gesteuerter Drehstrom-Gleichrichter nach einem der vorangehenden Ansprüche,
dadurch gekennzeichnet,
daß die Regelung der gleichgerichteten Ausgangsspannung (7) mit einem digitalen PID-Regler vorgenommen wird, der folgende Übertragungsfunktion hat:

$$\frac{r_0 + r_1 z^{-1} + r_2 z^{-2} + r_3 z^{-3}}{1 - z^{-1}}.$$

8. Gesteuerter Drehstrom-Gleichrichter nach einem der vorangehenden Ansprüche,
dadurch gekennzeichnet,
daß dem positiven und dem negativen Ausgang der Sechspuls-Brückenschaltungen (B) keine Glättungsdrosseln nachgeschaltet sind.

9. Gesteuerter Drehstrom-Gleichrichter nach einem der vorangehenden Ansprüche,
dadurch gekennzeichnet,
daß die Zündmustergeneriereinheit ein mit einem Komparator (15) verbundenes Löschregister (13) enthält, ferner ein mit einem weiteren Komparator (16) verbundenes Setzregister (14), daß beide Komparatoren (15, 16) zusätzlich an einen Timer (17) angeschlossen sind, der, nach dem Starten bei Null beginnend, in gleichbleibenden Schritten ein jeweils um ein Inkrement erhöhtes binäres Signal abgibt, daß das Löschregister (13) zum Zwischenspeichern des reduzierten Steuerwinkels bestimmt ist und das Setzregister (14) zum Zwischenspeichern des um ein Inkrement erhöhten reduzierten Steuerwinkels, daß ein von dem Komparator (15) stammendes Signal bei sechs parallelen bistabilen Flip-Flops (18) ein einheitliches Ausgangssignal erzeugt, daß der Komparator (16) mit sechs parallelen Schaltern (Imp7, Imp8, ... , Imp12) verbunden ist, daß diese Schalter (Imp7, Imp8, ... , Imp12) parallel mit denjenigen Eingängen der Flip-Flops (18) verbunden sind, die bei Eintreffen eines Impulses ein derartiges Ausgangssignal an dem betreffenden Flip-Flop (18) erzeugen, welches entgegengesetzt zu dem Ausgangssignal ist, welches von dem Komparator (15) erzeugt wird, daß die sechs Flip-Flops (18) ausgangsseitig an einen Zündmusterausgabeport (19) geführt sind, der mit ZÜndimpulsverstärkern der Stromrichterventile verbunden ist.

## Claims

1. Controlled polyphase alternating current rectifier with at least one partial unit with a first and a second polyphase alternating current system in parallel conduction branches (1, 2), which each comprise a respective six-pulse bridge circuit (B) with controllable rectifier valves, and with a device which produces a phase shift of the voltages of the first polyphase alternating current system by 30° relative to those of the second polyphase alternating current system, wherein this device lies in the conduction branch (2) of the second polyphase alternating current system and is connected in front of the six-pulse bridge circuit (B), which is disposed therein, with respect to the direction of energy flow and wherein the positive and negative output terminals of all six-pulse bridge circuits (B) are connected together directly and form the connecting terminals of the rectified output voltage (7), characterised thereby, that in the case of several partial units, all partial units are constructed identically and connected in parallel, that a respective mains choke (4) is connected in front of each of the six-pulse bridge circuits (B) in all conductors (1a, 1b, 1c and 3a, 3b, 3c) of the conduction branches (1, 2), that the output voltage (7) is automatically regulated by a single regulator (10), that control angles ($\alpha_1$) are produced for this purpose by this regulator (10) merely for a single fixed six-pulse bridge circuit (B) and that the control angles ($\alpha_2$) for each further six-pulse bridge circuit (B) are formed from these control angles ($\alpha_1$) with the inclusion of the current ($i_2$) flowing out of the respective six-pulse bridge circuit (B).

2. Controlled polyphase alternating current rectifier according to claim 1, characterised thereby, that the regulator (10) produces a control angle ($\alpha_1$) at fixed intervals of time.

3. Controlled polyphase alternating current rectifier according to claim 1 or 2, characterised thereby, that for the resetting of the output voltage (7) after each instant ($t_1$ to $t_6$) of a natural commutation, a reduced control angle is determined for the time-delayed driving of the rectifier valves (5) for each six-pole bridge circuit (B), that - in the case of a polyphase alternating current rectifier (A) with only a single partial unit - a control angle ($\alpha_2$) for the other six-pulse bridge circuit (B) is formed by the control angle ($\alpha_1$) produced by the regulator (10) with the addition of the integral of the difference of the current ($i_2$) out of the positive output (5a) of the respective six-pulse bridge circuit (B) and the current ($i_1$) out of the positive output (5a) of the fixed six-pulse bridge circuit (B), that in the case of several partial units, the control angles for the six-pulse bridge circuits (B) other than the fixed six-pulse bridge circuit (B) are formed thereby, that - for each individual one of these six-pulse bridge circuits (B) - the integral of the deviation of the current from the positive output (5a) of the six-pulse bridge circuit (B) concerned from the mean value of the currents from the positive outputs of all six-pulse bridge circuits (B) is added to the control angle ($\alpha_1$) produced by the regulator (10), that - between the instants ($t_1$ to $t_6$) of the natural commutation - reduced control angles are computed from the control angles ($\alpha_1, \alpha_2$) in that the reduced control angle assumes only values of 0° to 60° by a single subtraction of 0°, 60° or 120° from each individual control angle ($\alpha_1, \alpha_2$), that the magnitude of the reduced control angle is proportional to the duration from the next instant ($t_1$ to $t_6$) of the natural commutation to the ignition of those rectifier valves which are determined by an ignition pattern formed by an ignition pattern generating unit, that the control angles ($\alpha_1, \alpha_2$) from 0° to 60° are graded into a first range, that the control angles ($\alpha_1, \alpha_2$) from more than 60° to 120° are graded into a second range and that the control angles ($\alpha_1, \alpha_2$) of more than 120° are graded into a third range, that the voltage period is subdivided into six cycles by the course of a conductor voltage of a certain polyphase alternating current system, that an ignition pattern is stored with rising index for each cycle in a table, that the sequence of the ignition patterns to be issued from this table individually to the six-pulse bridge circuits (B) depends on the ranges, to which two successive control angles are allocated, wherein - in the case of like ranges - the ignition pattern with the next higher index is delivered at the next instant ($t_3$ to $t_6$) of the natural commutation and the sequence departs from the sequence in the table only when two successive control angles ($\alpha_1, \alpha_2$) are allocated to two different ranges, wherein - in the case of a step from a higher range to a lower range - after the next instant ($t_3$ to $t_6$) of the natural commutation, an intermediate pulse pattern is delivered initially, which is stored in the table in front of the actual ignition pattern and the actual ignition pattern is subsequently conducted to the six-pulse bridge circuit (B) concerned with a delay dependent on the reduced control angle.

4. Controlled polyphase alternating current rectifier according to one of the preceding claims, characterised thereby, that the device is a polyphase alternating current transformer (3) with a delta winding at the primary side and a star winding at the secondary side.

5. Controlled polyphase alternating current rectifier according to one of the claims 1 to 3, characterised thereby, that the device is a polyphase alternating current transformer (3) with a star winding at the primary side and a delta winding at the secondary side.

6. Controlled polyphase alternating current rectifier according to one of the preceding claims, characterised thereby, that the six-pulse bridge circuits (B) contain thyristors (5) as rectifier valves.

7. Controlled polyphase alternating current rectifier according to one of the preceding claims, characterised thereby, that the regulation of the rectified output voltage (7) is undertaken with a digital proportional-integral-differential regulator which has the following transfer function:

$$\frac{r_0 + r_1 z^{-1} + r_2 z^{-2} + r_3 z^{-3}}{1 - z^{-1}}.$$

8. Controlled polyphase alternating current rectifier according to one of the preceding claims, characterised thereby, that no smoothing chokes are connected behind the positive and the negative output of the six-pulse bridge circuits (B).

9. Controlled polyphase alternating current rectifier according to one of the preceding claims, characterised thereby that the ignition pattern generating unit contains an erase register (13), further a set register (14) connected with a further comparator (16), that the two comparators (15, 16) are additionally connected to a timer (17) which, beginning at zero after starting, delivers in uniform steps a binary signal increased each time by an increment, that the erase register (13) is intended for the intermediate storage of the reduced control angle and the set register (14) for the intermediate storage of the reduced control angle increased by an increment, that a signal originating from the comparator (15) generates a uniform output signal in the case of six parallel bistable flip-flops (18), that the comparator (16) is connected with six parallel switches (Imp 7 to Imp 12), that these switches (Imp 7 to Imp 12) are connected in parallel with those inputs of the flip-flops (18) which on arrival of a pulse generate at the flip-flop (18) concerned an output signal of that kind which is opposite to the output signal which is generated by the comparator (15), and that the six flip-flops (18) are led at the output side to an ignition pattern output port which is connected with ignition pulse amplifiers of the rectifier valves.

**Revendications**

1. Redresseur commandé à courant triphasé comprenant au moins une unité partielle munie de premier et second systèmes de courant triphasé montés dans des branches de ligne parallèles (1, 2) qui présentent un circuit en pont à six impulsions (B) avec des soupapes de convertisseur commandables, et comprenant un dispositif qui génère un décalage de phase des tensions du premier système de courant triphasé par rapport à celle du second système de courant triphasé et, ce, de l'ordre de 30° el, ce dispositif se trouvant dans la branche de ligne (2) du système de courant triphasé et étant monté, par rapport au sens de passage de l'énergie, en amont du circuit en pont à six impulsions (B) qui s'y trouve, et les bornes de sortie positives et négatives de tous les circuits en pont à six impulsions (B), qui sont reliées directement entre elles, constituant ainsi les connexions de la tension de sortie redressée (7), caractérisé en ce que,

dans le cas de plusieurs unités partielles, toutes les unités partielles sont de construction identique et sont montées en parallèle, qu'une bobine de réactance (4) précède les circuits en pont à six impulsions (B) dans tous les conducteurs (1a, 1b, 1c et 3a, 3b, 3c) de la branche de ligne (1, 2), que la tension de sortie (7) est automatiquement régulée par un régulateur unique (10), qu'en outre ce régulateur (10) ne génère des angles de commande ($\alpha$1) que pour un circuit unique déterminé en pont à six impulsions (B), et qu'à partir de ces angles de commande ($\alpha$1) pour chaque autre circuit en pont à six impulsions (B), les angles de commande ($\alpha$2) sont formés en faisant intervenir le courant (i2) provenant du circuit respectif en pont à six impulsions (B).

2. Redresseur commandé à courant triphasé, selon la revendication 1,
caractérisé en ce que
le régulateur (10) génère, à des laps de temps fixes, un angle de commande ($\alpha$1).

3. Redresseur commandé à courant triphasé, selon la revendication 1 ou 2,
caractérisé en ce que,
pour le réglage de la tension de sortie (7), après chaque instant ($t_1$, $t_2$, $t_3$, ... $t_6$) d'une commutation naturelle pour chaque circuit en pont à six impulsions (B), un angle de commande réduit est transmis pour la commande retardée des soupapes de convertisseur (5), en ce que, dans le cas d'un redresseur de courant triphasé (A), muni d'une unité partielle unique, un angle de commande ($\alpha$2) est formé pour l'autre pont en pont à six impulsions (B) par l'angle de commande ($\alpha$1) généré par le régulateur (10), en additionnant l'intégrale résultant de la différence entre le courant (i2) provenant de la sortie positive (5a) du circuit respectif en pont à six impulsions (B), et le courant (i1), provenant de la sortie positive (5a) du circuit fixé en pont à six impulsions (B), en ce que, dans le cas de plusieurs unités partielles, les angles de commande pour les différents circuits en pont à six impulsions (B) déterminés par le circuit fixe en pont à six impulsions (B), sont formés par le fait que pour chaque circuit en pont à six impulsions (B), l'angle de commande ($\alpha$1), généré par le régulateur (10), est additionné à l'intégrale résultant de la divergence du courant provenant de la sortie positive (5a) du circuit en pont à six impulsions (B) par rapport à la valeur moyenne des courants provenant des sorties positives de tous les circuits en pont à six impulsions (B), en ce qu'entre les instants ($t_1$, $t_2$, $t_3$, ... $t_6$) de la commutation naturelle, sont calculés des angles de commande réduits à partir des angles de commande ($\alpha$1, $\alpha$2) dans le fait que par l'intermédiaire d'un retrait unique de 0°, 60° ou 120° de chaque angle de commande ($\alpha$1, $\alpha$2), l'angle de commande réduit n'augmente que des valeurs de 0° à 60°, en ce que la grandeur de l'angle de commande réduit est proportionnelle à la durée du moment suivant ($t_1$, $t_2$, $t_3$, ... $t_6$) de la commutation naturelle jusqu'à l'amorçage des soupapes de convertisseur qui sont déterminées par un modèle d'amorçage formé par une unité de génération de modèle d'amorçage, en ce que les angles de commande ($\alpha$1, $\alpha$2) de plus de 60° à 120° sont répartis dans une seconde zone et les angles de commande ($\alpha$1, $\alpha$2) de plus de 120°, dans une troisième zone, en ce que, par la courbe d'une tension de conducteur d'un système de courant triphasé, la période de tension est divisée en six cycles, en ce que, pour chaque cycle, un modèle d'amorçage est stocké dans un tableau à index croissant, en ce que l'ordre des modèles d'amorçage, à délivrer à partir de ce tableau, individuellement aux circuits en pont à six impulsions (B) s'oriente sur les zones qui sont associées à deux angles de commande successifs, dans le cas de zones identiques, le modèle d'amorçage, qui présente l'index suivant le plus élevé, étant délivré à l'instant suivant ($t_3$, ... $t_6$) de la commutation naturelle et l'ordre ne divergeant de l'ordre du tableau que quand deux angles de commande successifs ($\alpha$1, $\alpha$2) sont attribués à deux zones différentes, si bien que dans le cas d'un saut d'une zone plus élevée à une zone inférieure après l'instant suivant ($t_3$, ... $t_6$) de la commutation naturelle, un modèle d'impulsion intermédiaire est tout d'abord délivré et stocké dans le tableau avant le modèle d'amorçage actuel, et ensuite le modèle d'amorçage actuel est envoyé au circuit en pont à six impulsions (B) et, ce, avec un retard dépendant de l'angle de commande réduit.

4. Redresseur commandé à courant triphasé, selon l'une des revendications précédentes,
caractérisé en ce que
le dispositif est un transformateur triphasé (3) muni d'un enroulement primaire en triangle et d'un enroulement secondaire en étoile.

5. Redresseur commandé à courant triphasé, selon l'une des revendications 1 à 3,
caractérisé en ce que
le dispositif est un transformateur triphasé (3) muni d'un enroulement primaire en étoile et d'un enroulement secondaire en triangle.

6. Redresseur commandé à courant triphasé, selon l'une des revendications précédentes,
caractérisé en ce que
les circuits en pont à six impulsions (B) comprennent des thyristors (5) faisant office de soupapes de convertisseur.

7. Redresseur commandé à courant triphasé, selon l'une des revendications précédentes,
caractérisé en ce que
la régulation de la tension de sortie redressée (7) est effectuée avec un régulateur P.I.D numérique qui présente la fonction de transfert suivante :

$$\frac{r0 + r_1 Z^{-1} + r_2 Z^{-2} + r_3 Z^{-3}}{1 - Z^{-1}}$$

8. Redresseur commandé à courant triphasé, selon l'une des revendications précédentes,
caractérisé en ce
qu'aucune bobine de lissage n'est placée en aval de la sortie positive et de la sortie négative des circuits en pont à six impulsions (B).

9. Redresseur commandé à courant triphasé, selon l'une des revendications précédentes,
caractérisé en ce que
l'unité de génération de modèle d'amorçage comprend un registre d'extinction (13) relié à un comparateur (15), en outre un registre de positionnement (14) relié à un autre comparateur (16), en ce que les deux comparateurs (15, 16) sont en plus connectés à une minuterie (17) qui, après le départ commençant à zéro, délivre, par étape constante, un signal binaire augmenté d'un incrément, en ce que le registre d'extinction (13) est destiné à stocker temporairement l'angle de commande réduit et le registre de positionnement (14), pour le stockage intermédiaire de l'angle de commande réduit augmenté d'un incrément, en ce qu'un signal, provenant du comparateur (15) génère, en présence de six bascules bistables parallèles (18), un signal de sortie unitaire, en ce que le comparateur (16) est relié à six interrupteurs parallèles (Imp7, Imp8, ... , Imp12), en ce que ces interrupteurs (Imp7, Imp8, ... , Imp12) sont reliés parallèlement aux entrées des bascules (18) qui génèrent, à l'apparition d'une impulsion un signal de sortie de ce type au niveau de la bascule concernée (18), ce signal s'opposant au signal de sortie qui est généré par le comparateur (15), en ce que les six bascules (18) sont guidées, côté sortie, à un circuit de mise en forme du modèle de signaux d'amorçage (19) qui est relié à des amplificateurs d'impulsion d'amorçage des soupapes de convertisseur.

# FIG.1

# FIG.2

# FIG.3

# FIG.4

reduzierter Steuerwinkel | reduzierter Steuerwinkel +1

Imp 7
Imp 8
⋮
Imp 12

Imp 1
Imp 2
⋮
Imp 6

s q
r

s q
r

s q
r

&

&

&

# FIG.5

| Zyklus=7 | Zyklus=2 | Zyklus=3 | Zyklus=4 | Zyklus=7 |

$t_1$   $t_2$   $t_3$   .... $t_6$   $t$

Start

alter_Bereich=neuer_Bereich

Steuerwinkel>120°   nein

ja

neuer_Bereich=2

reduzierter Steuerwinkel Steuerwinkel-120°

Steuerwinkel>60°

nein

neuer_Bereich =0

reduzierter Steuerwinkel =Steuerwinkel

ja

neuer_Bereich=1

reduzierter Steuerwinkel Steuerwinkel-60°

Zündmusterindex=Zyklus-neuer_Bereich

Zündmuster=Tabelle[Zündmusterindex]

neuer_Bereich < alter_Bereich?

neuer_Bereich=alter_Bereich?

nein

ja

kein Zwischenpuls

nein

kein Zwischenpuls   ja

Zwischenpulsmuster=Tabelle[Zündmusterindex-1]

Ende

Start

Sperrsignal aktivieren

Timer anhalten

bisher gültiges Zündmuster direkt ausgeben

Zwischenpuls?

ja

Zwischenpulsmuster direkt ausgeben

nein

Schalter Imp1 bis Imp6 für Zündmuster setzen

Löschregister m. reduziertem Steuerwinkel laden

Setzregister m. reduziertem Steuerwinkel +1 laden

Sperrsignal wieder aufheben

Timer Null setzen und starten

Ende

Fig. 6